# EUROPEAN PATENT SPECIFICATION

(11) **EP 1 586 068 B1**
(45) Date of publication and mention of the grant of the patent: **30.07.2008**
(21) Application number: 04704877.2
(22) Date of filing: 23.01.2004
(51) Int. Cl.: G06F 19/00, C12Q 1/68

(54) **METHODS FOR ANALYZING POLYMER POPULATIONS**
VERFAHREN ZUR ANALYSE VON POLYMER-POPULATIONEN
METHODES D'ANALYSE DE POPULATIONS DE POLYMERES

(30) Priority: 23.01.2003 US 442175 P
(43) Date of publication of application: 19.10.2005
(73) Proprietor: U.S. Genomics, Inc., Woburn, MA 01801 (US)
(72) Inventor: GILMANSHIN, Rudolf, Waltham, MA 02453 (US); PHILLIPS, Kevin, A., Somerville, MA 02144 (US); LARSON, Jonathan, New Ipswich, NH 03071 (US)
(74) Representative: Williams, Gareth Owen
(86) International application number: PCT/US2004/001823
(87) International publication number: WO 2004/066185

(56) References cited:
- WO-A-00/09757
- WO-A-98/10097
- WO-A-98/35012
- US-A1- 2002 155 490
- US-B1- 6 355 420
- VALENTINE S J ET AL: "Multidimensional separations of complex peptide mixtures: a combined high-performance liquid chromatography/ion mobility/time-of-flight mass spectrometry approach" INTERNATIONAL JOURNAL OF MASS SPECTROMETRY, ELSEVIER SCIENCE PUBLISHERS, AMSTERDAM, NL, vol. 212, no. 1-3, 15 November 2001 (2001-11-15), pages 97-109, XP004339995 ISSN: 1387-3806
- HANSEN G I ET AL: "Structural isomers of bis-PNA bound to a target in duplex DNA" JOURNAL OF MOLECULAR BIOLOGY, LONDON, GB, vol. 307, no. 1, 16 March 2001 (2001-03-16), pages 67-74, XP004469202 ISSN: 0022-2836 cited in the application

## Description

### Field of the Invention

The present invention relates generally to methods for analyzing complex mixtures of polymers. This facilitates inter alia the generation of accurate sequence maps of analyzed polymers (e.g., nucleic acids).

### Background of the Invention

Analysis of polymers including sequence analysis often involves analysis of polymer mixtures.
Patent W09835012 and the work by Valentine et al. (International Journal of Mass Spectrometry 212 (2001) 97-109) disclose methods for analyzing polymer mixtures. Polymer mixtures may contain multiple copies of identical polymers, or they may contain multiple copies of disparate polymers (in terms of size and/or sequence). In the former case, even though the sample is homogeneous with respect to the polymer, the data generated is not directly useful because the polymers are usually analyzed in an orientation-insensitive manner. As a result, each polymer is independently analyzed in either a "head-first" or a "tail-first" orientation. Data sets resulting from randomly analyzed individual polymers cannot be superimposed due to the non-oriented nature of the data.

Additionally, polymer analysis usually requires analysis of more than one (and often times several hundred or several thousand) copies of the same polymer. This is due to the inefficient labeling of single polymers and inefficient detection of probes that are minimally labeled. Labeling efficiencies of 50% to 95% are common, particularly when the labeling strategy involves labeling target sequence sites in nucleic acids with nucleic acid probes. For example, detection of single fluorophores at a high rate has an average efficiency of 10-90% and is dependent upon the properties of the fluorophore used as well as on the trajectory of the probe and polymer through the excitation spot of the detection system.

Analysis of multiple copies of a polymer is therefore necessary in order to compile information for all target sequence sites in a polymer.

Accordingly, when a sample contains more than one copy of a particular polymer (or in more complex situations, more than one type of polymer), intensity profiles generated from identical and uniformly oriented polymers are difficult to distinguish from all other intensity profiles. Superimposition of intensity profiles from randomly
oriented polymers of one or more types are not particularly useful, and one is left analyzing signals from individual polymers only.

Thus, there exists a need for discerning individual polymer data from a heterogeneous sample. An example of this is the need to accurately assess polymer orientation in order to generate polymer sequence maps. The ability to discern polymers from each other and determine polymer orientation should increase the amount of usable sequence data available and reduce the number of polymers that need to be analyzed. This is particularly useful if there is only a limited supply of the polymer (e.g., rarely transcribed mRNA species).

### Summary of the Invention

The invention provides methods and algorithms for processing polymer data. The method enables the identification of polymer-specific and orientation-specific data from a population data set.

In one aspect, the invention provides a method for analyzing polymer intensity data from a sample. The method comprises obtaining intensity profiles from individual labeled polymers contained in the sample, aligning individual intensity profiles from individual labeled polymers with respect to an alignment reference point, combining aligned individual intensity profiles to generate a sample population profile, selecting a peak in the sample population profile and obtaining individual intensity profiles that contribute to peak, combining individual intensity profiles that contribute to the peak to generate a peak profile, and comparing the peak profile with the sample population profile.

In one embodiment, the sample contains a heterogeneous mixture of polymers. The heterogeneous mixture of polymers may comprise differentially sized fragments of a parent polymer. The heterogeneous mixture of polymers may comprise polymers with different sequences.

In one embodiment, the profiles are intensity versus length profiles. Length may be contour length or actual length, depending on the embodiment.

The intensity data may be fluorescence intensity data and intensity profiles may be fluorescence intensity profiles, but neither is so limited.

In one embodiment, the polymers are labeled with a sequence specific probe. Additionally, the polymers may be labeled with a sequence non-specific label. In one embodiment, the sequence non-specific label is a backbone label.

In important embodiments, the method is implemented on a computer.

In one embodiment, the polymer is a nucleic acid, such as DNA or RNA. In one embodiment, the DNA is genomic nuclear DNA, mitochondrial DNA or cDNA. In another embodiment, the RNA is mRNA.

In one embodiment, the alignment reference point is an internal reference point. In another embodiment, the alignment reference point is a center of molecule reference point. In yet another embodiment, the alignment reference point is a sequence specific probe bound to individual polymers. In still another embodiment, the alignment reference point is a sequence non-specific probe bound to individual polymers. In one embodiment, the alignment reference point is a center of molecule reference point. In another embodiment, the center of molecule reference point is the midpoint of an individual profile.

The intensity profiles may be obtained from individual polymers in flow, or from individual polymers fixed to a solid support. Alternatively, the intensity profiles may be obtained from individual polymers embedded in a gel matrix.

In one embodiment, the sample population profile is a cumulative population profile. In another embodiment, the sample population profile is an averaged population profile. Similarly, the peak profile may be a cumulative peak profile or an averaged peak profile.

In one embodiment, the peak is randomly selected. In another embodiment, the peak is selected based on intensity. In yet another embodiment, the peak is selected based on the presence of its mirror image peak in the population profile.

In some embodiments, the polymers in the sample are sorted according to size prior to aligning individual intensity profiles.

In one embodiment, a peak profile that resembles the sample population profile indicates a non-oriented profile.

In another embodiment, a peak profile that consists of a subset of peaks from the population profile indicates a putative oriented profile. In one related embodiment, the method further comprises inverting the putative oriented profile to generate a putative inverted profile, combining the putative oriented profile with the putative inverted profile to generate a putative non-oriented profile, and comparing the putative non-oriented profile with the population profile, wherein a putative non-oriented profile that is identical to the population profile indicates that the putative oriented profile is an oriented profile, that the putative inverted profile is an inverted profile, and that the putative non-oriented profile is a non-oriented profile.

In a second related embodiment, the method further comprises determining , whether individual peaks in the peak profile have corresponding mirror image peaks in the population profile when the alignment reference point is a center of molecule reference point. The presence of corresponding mirror images may indicate that the putative oriented profile is an oriented profile.

In a third related embodiment, the method further comprises determining whether the oriented peak has a corresponding mirror image peak in the population profile when the alignment reference point is a center of molecule reference point. This latter method may further comprise obtaining individual intensity profiles that contribute to the mirror image peak, and combining individual intensity profiles that contribute to the mirror image peak to generate a mirror image peak profile, and optionally comparing the mirror image peak profile with the population profile, and optionally determining whether the mirror image peak profile is a mirror image of the peak profile, and optionally inverting and combining the mirror image peak profile with the peak profile provided the mirror image peak profile is a mirror image of the peak profile.

In one embodiment, the mirror image peak profile is a cumulative mirror image peak profile. In another embodiment, the mirror image peak profile is an averaged mirror image peak profile.

The method may further comprise inverting the oriented profile, combining the oriented profile with the inverted profile to generate a non-oriented profile, and comparing the non-oriented profile with the sample population profile.

The method may further comprise subtracting the peak profile from the sample population profile, or subtracting the mirror image peak profile from the sample population profile, or subtracting the peak profile and the mirror image peak profile from the sample population profile.

The method may further comprise determining whether additional peaks remain in the sample population profile following subtraction of the peak profile and the mirror image peak profile. In a related embodiment, the presence of additional peaks is indicative that the sample comprised different polymers.

In one embodiment, the peak is visible in an intensity versus length profile. In another embodiment, the peak corresponds to bin counts.

In one embodiment, the polymer is completely stretched, while in another it is partially stretched. In yet another embodiment, the polymer is uniformly stretched.

Each of the limitations of the invention can encompass various embodiments of the invention. It is therefore anticipated that each of the limitations of the invention involving any one element or combinations of elements can be included in each aspect of the invention. This invention is not limited in its application to the details of construction and the arrangement of components set forth in the following description or illustrated in the drawings. The invention is capable of other embodiments and of being practiced or of being carried out in various ways. Also, the phraseology and terminology used herein is for the purpose of description and should not be regarded as limiting. The use of "including", "comprising", "having", "containing" or "involving" and variations thereof herein, is meant to encompass the items listed thereafter and equivalents thereof as well as additional items.

### Brief Description of the Drawings

The drawings are illustrative only and are not required for enablement of the invention disclosed herein.

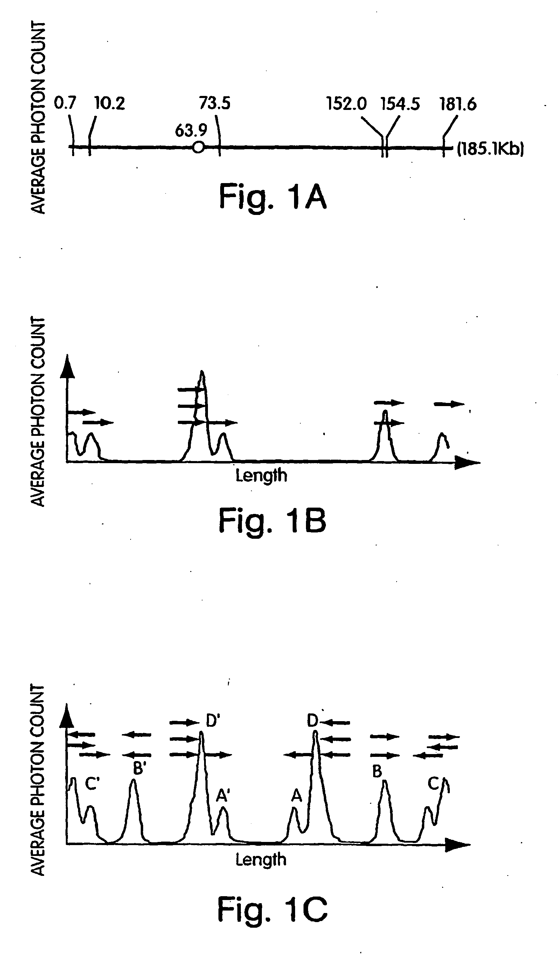

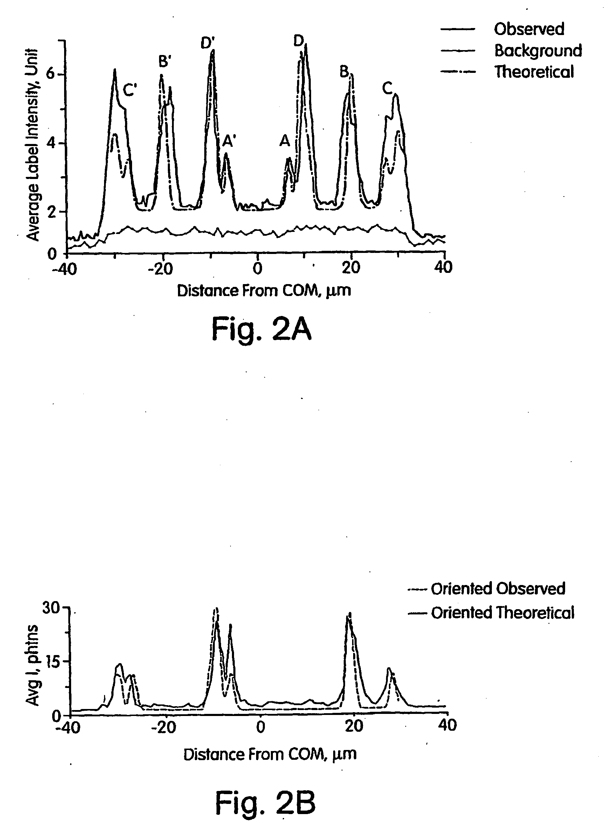

Fig. 1 shows the location of particular sequence sites ("target sequence sites") on a polymer (top panel), a theoretical direct signal profile of the polymer based on these sequence sites (middle panel), and a theoretical combination of the direct signal profile and the mirror image signal profile showing the duplicate signals on either side of the center of the molecule (bottom panel). This latter plot is used in Fig. 2. The middle panel resembles and can represent a theoretical "individual intensity profile" and/or an oriented profile. The bottom panel resembles and can represent a population profile and/or a non-oriented profile. The arrows in the middle and bottom panels indicate the orientation of the polymer which contributes to the corresponding peak. The profiles are plotted as intensity (or photon count) as a function of length (i.e., position on the polymer).

Fig. 2 shows signal intensity as a function of polymer position relative to the center of the molecule for a single polymer type prior to orientation (top panel). The observed and theoretical oriented sequence information is also shown (bottom panel). The observed signals are indicated by a solid line and the theoretical signals are indicated by a dashed line. The observed oriented profile shown in the bottom panel was derived using the methods described herein.

### Detailed Description of the Invention

The invention provides, inter alia, methods for evaluating and manipulating polymer sequence data. These methods are used to align, orient and thus discern signal profiles that are derived from individual polymers in a sample.

The need to discern polymer profiles derives in part from the fact that generally it is impossible to label and detect all desired target sequence sites within a polymer with 100% efficiency (i.e., not every target site is labeled on every polymer). To compensate for this, multiple copies of an identical polymer are usually analyzed and the resultant signals are combined in order to observe and thus detect all sequence specific sites along the polymer.

As used herein, analyzing a polymer means obtaining information about the structure of the polymer such as its size, the order of its sequence sites, its relatedness to other polymers, the identity of its sequence sites, or its presence or absence in a sample. The structure of a polymer can reveal important information about its function since these parameters are generally interrelated in biological polymers.

In some instances, the sample may contain multiple copies of the same polymer. Such a sample is considered to be homogeneous. Polymers in homogenous samples are identical in length and sequence. Even a homogeneous sample however will give rise to two types of profiles: a "direct" profile and an "inverted" profile. This is because most, if not all, polymer analysis systems are orientation-insensitive. As a result, each polymer has an equal chance of being analyzed in a "head-first" orientation (resulting in a "direct" profile) or in a "tail-first" orientation (resulting in an "inverted" profile"). When the profiles from each polymer are combined, the resulting profile (referred to herein as a "population profile" to distinguish it from an "individual polymer profile") contains signals (or peaks) from the direct and the inverted profiles. Prior to the invention, it was difficult to discern direct profile signals from inverted profile signals.

In other instances, the sample may contain multiple copies of a plurality of polymers, wherein each of the plurality of polymers is different. As used herein, different polymers are polymers that differ in length and/or sequence. Examples include fragments of a larger polymer such as restriction fragments of a parent polymer or sheared genomic DNA, and mRNA transcripts expressed in a cell or tissue. "Different polymers" may however share some sequence identity, provided that they are not 100% identical with respect to their sequence. In the case of heterogeneous samples, the combined population profile is even more complex since it contains direct and inverted profiles from more than one polymer type.

The invention provides methods for manipulating and processing the signals and profiles from homogeneous and heterogeneous samples. In its simplest form, it provides methods for discerning direct profiles from inverted profiles in a homogeneous sample. It can also accomplish this for a given polymer in a heterogeneous sample. In a more complex form, it discerns different polymers from each other as well as distinguishing direct and inverted profiles for each polymer type.

The polymer being analyzed (sometimes referred to herein as the "target" polymer) may be free flowing or it may be fixed to a solid support. In a fixed conformation, the polymer is attached to a solid support at one or multiple attachment points. The nature of the solid support is not limiting to the invention. The solid support may be any surface to which the polymer can be attached without comprising its integrity. Various types of solid supports are available (including microchips, beads and the like), of which the art is familiar. When fixed it a solid support, the polymer is immobile. In this latter embodiment, the interrogation and/or detection station of a polymer analysis system may move relative to the polymer. In a flow conformation, the polymer is able to move in a fluid, preferably through an interrogation station within the polymer analysis system. The polymer may also be attached to a support that is itself mobile, such as for example a free flowing bead.

Another immobilization approach involves the use of polymers trapped in a gel matrix. Stretching of the polymer is accomplished through the use of an electric field, for example.

In the absence of directional labeling (e.g., end specific labeling) of the polymer, it is difficult to determine the direction in which the polymer is analyzed since the polymer analysis system is orientation-insensitive. As a result, polymers are expected to orient themselves randomly with approximately equal numbers being analyzed head-first and tail-first, regardless of whether they are provided in free flowing or fixed conformations.

The methods provided herein generally involve several data processing steps. These include alignment of individual polymer profiles, compilation of individual profiles to form population profiles, selection of individual signals (or peaks) from the population profile, extraction of individual profiles that contribute to the selected signal (or peak), compilation of these latter individual profiles to yield a "peak profile", and comparison of the peak profile with the population profile. This latter comparison yields information regarding the oriented nature of the subset of polymers giving rise to the peak in the population profile. For example, this subset of polymers may itself comprise direct and inverted polymer profiles. More preferably, this subset of polymers comprises polymers oriented in one direction (e.g., all head-first or all tail-first). Each of these steps will be discussed in greater detail below.

The polymers to be analyzed must be labeled in a sequence specific manner. It is this labeling that gives rise to the signals (or peaks) which are later evaluated by the methods of the invention. The polymer is generally labeled prior to analysis with the polymer analysis system. Polymer labeling will be discussed in greater detail below. Sequence specific labeling can be accomplished in any number of ways known in the art. In important embodiments, the polymer is labeled using a binding partner that binds to the polymer in a sequence specific manner. The most common example of a sequence specific binding partner for nucleic acid polymers is a nucleic acid probe. As used herein, a nucleic acid probe is a nucleic acid that hybridizes to the polymer being analyzed (i.e., the target polymer) at a site that is complementary to its own sequence. The terms "probe" and "tag" and "unit specific marker" are used interchangeably herein. The nature of a nucleic acid probe will be described in greater detail herein. Briefly, it can be of any length and of any sequence. The shorter the length, the greater the resolution that may be achieved. Usually, nucleic acid probes should be contacted to the target polymer under conditions that promote hybridization between true complements (i.e., where each base of the probe is bound to its complementary base on the target polymer in a continuous and contiguous manner). These conditions are referred to herein as stringent conditions. The art is familiar with such conditions. (See for example Maniatis et al., Molecular Cloning: A Laboratory Manual, Cold Spring Harbor (1982).) The methods however are not limited to hybridization under stringent conditions and can be performed under conditions in which less than 100 % of the probe bases are bound to target polymer bases.

The polymer may additionally be labeled in a sequence non-specifie manner, as will also be discussed in greater detail below. In some instances; the non-specific labels are evenly distributed along the length of the polymer. An example of non-specific labels are stains that bind to the backbone of the target nucleic acid polymer. Preferably, the sequence non-specific labels uniformly label the polymer along its length and thus do not give rise to any intensity "peaks". Intensity peaks should derive solely from the sequence specific labels described herein.

The labeled polymers are analyzed using a polymer analysis system. These systems include interrogation and detection stations that serve to stimulate a signal from a polymer (or a probe bound thereto) and to detect the resultant signal, respectively. Preferably, the polymer analysis system is capable of analyzing single polymers. Even more preferably, they analyze the polymer linearly and are therefore referred to as linear single polymer analysis systems. Such systems are discussed in greater detail below. An exemplary polymer analysis system is the GeneEngine described in U.S. Patent No. 6,355,420 B1, issued March 12, 2002.

The polymer analysis system analyzes individual polymers starting from one end of the polymer and moving along the polymer length towards the opposite end. In the process, signals are recorded as a function of their position or location on the polymer. The sum total of signals for a given polymer is then plotted as a function of position on the polymer. This plot is referred to herein as a profile. If the profile derives from analysis of a single copy of a polymer, then it is referred to herein as an "individual profile". If instead the profile derives from the combination (or compilation) of a plurality of individual profiles, then it is referred to as a "population profile". As will be discussed below, the population profile may be oriented or non-oriented. As used herein, profiles are also referred to as "intensity profiles" since they reflect label intensity along the length of the polymer. Labels will be discussed in greater detail below.

Once obtained, individual polymer profiles are aligned relative to each other in order to facilitate their superimposition. Alignment is performed using an alignment reference point. An alignment reference point is an identical site present in each analyzed polymer of a given type. The alignment reference point may be internal to the polymer (i.e., an internal alignment reference point) or it may be at an end of a polymer (i.e., a terminal alignment reference point). It may be sequence dependent or sequence independent, depending on the polymer. Furthermore, it may be intrinsically detectable or it may be detected through the use of an extrinsic probe, for example. Accordingly, the reference point may be visualized through the binding of a sequence specific probe or a sequence non-specific probe to individual polymers.

As will be discussed in greater detail below, the method uses two reference points. One reference point is used to align individual profiles in order to generate a population profile (i.e., the alignment reference point) and the other reference point is used to determine orientation of individual profiles (i.e., the orientation reference point). The orientation reference point is preferably an internal reference point. More preferably, it is the center of the molecule (or center of the polymer). The center of the molecule can be determined by labeling the polymer uniformly along its length with for example a length proportional dye or stain, estimating the length of the polymer based on the length of the intensity profile and thereby determining the midpoint or center of the molecule. The center of the molecule is a suitable reference point regardless of the stretching characteristics of the target polymer (i.e., the center of the molecule may still be determined even if the target polymer is not uniformly and completely stretched.) For example, it is possible that one or both ends of the polymer are compacted to an extent that precludes linear polymer analysis in these regions. Regardless, if the polymer is labeled with a length proportional label, these compacted areas are still useful for determining the center of the molecule (i.e., the signal from these compacted areas is still indicative of the length of polymer therein and can be used together with the more linear portions of the polymer to determine the midpoint of the polymer).

The reference point may also be an origin of replication, a transcriptional promoter, a centromere, a highly repetitive sequence, and the like.

The method preferably uses stretched linear polymers in order to maximize the amount of sequence information that can be attained. Non-linear and/or coiled regions of the target polymer are less useful for determining sequence. The polymer may be uniformly stretched along its length, or it may contain regions that are more or less stretched than other regions along its length. In either case, the polymer and/or regions within the polymer may be maximally stretched. The polymer can also be less than maximally stretched. Thus if maximum stretching is referred to as 100% stretched (see below for definition of maximal stretching), then the polymer may also be at least 50%, at least 60%, at least 70%, at least 80%, at least 90%, at least 95%, or at least 99% stretched. In important embodiments, the polymer is uniformly but not maximally stretched. As will be described in the Examples, polymers having stretched and compacted regions are still useful.

Although the specification refers to polymer length (for example, on the x-axis of Figs.1 and 2), the invention similarly relates to polymer contour length Lc. Polymer length as shown in the intensity vs. length plots (and thus profiles) represents the polymer projection in the direction of flow or other stretching force. Actual polymer length is the length of the polymer backbone or contour length (Lc) (i.e., the length per nucleotide times the number of nucleotides, independent of polymer conformation). For B-form DNA, the length per nucleotide is 0.34 nm. The measured length and contour length are equal when the polymer is maximally stretched (i.e., 100% stretched). Thus, the ratio of measured length to contour length is indicative of the extent of stretching of the polymer.

Sequence non-specific labeling, such as intercalation, changes the contour length by expanding the DNA. However, Lc can be defined even for such "swollen" DNA and still be used as to determine the extent of stretching. Overstretched DNA is essentially denatured and should be avoided.

Once aligned, the individual profile can be combined to yield a population profile. "Combining" individual profiles as used herein means that the aligned and possibly superimposed profiles are added together (i.e., intensity values at a given position from one profile are added to corresponding intensity values at the same position in another profile). The population profile may be a cumulative profile, meaning that it represents the sum total of all intensity values as a function of position along the polymer. Alternatively, it may be an averaged or normalized profile, meaning that it represents the averaged or normalized intensity value as a function of position along the polymer. The averaged or normalized profile is obtained by dividing the intensity values on a cumulative profile by the number of contributing profiles. Importantly, the population profiles may derive from individual profiles from identical and/or different polymers, both of which will contribute direct and inverted profiles. As used herein, a sample population profile is the profile that combines all individual profiles obtained from a sample and thus should include signals from all labeled polymers in the sample.

The data from such analyses is generally combined in order to achieve higher signal to noise ratios than would be possible by analyzing a single polymer. Additionally, combining individual profiles yields the complete pattern of sequence specific target sites on a polymer. Individual profiles may only provide signals for a subset of target sites. Moreover, they may also include probes bound at incorrect sites (i.e., mismatched probes). This is because binding of nucleic acid probes to a nucleic acid polymer is generally less than 100% efficient and specific (e.g., hybridization efficiency may range from 50% to 95% and hybridization specificity may range from 2 to 20). Hybridization specificity is the ratio of the proportion of correctly labeled target sites to the proportion of incorrectly labeled sites. In addition, not every probe is detected. For example, probes with one or few detectable labels on them are less likely to be detected. Detection of single fluorophores at a high rate has an average efficiency 10-90% and depends upon the properties of fluorophore used as well as on the trajectory of the probe and polymer through the excitation spot of the polymer analysis system.

Population profiles generally contain twice as many signals (or peaks) as the number of actual sequence specific sites on the target polymer. This is because at a minimum the population profile is made up of direct and inverted individual profiles. If sequence information is desired (e.g., in order to generate a sequence map), then it is desirable to separate direct and inverted profiles from each other. Population profiles can also be used as identifiers for a particular polymer and as such are referred to as barcodes or fingerprints of the polymer. In preferred embodiments, the barcode or fingerprint is an oriented population profile (i.e., a population profile in which all contributing individual profiles are oriented in the same direction, either head-first or tail-first). However, the population profile can also serve as an identifier even if in non-oriented form, in some cases.

Once the population profile is formed, individual peaks in the profile are further analyzed. It is desirable to select individual peaks that are formed from a subset of oriented individual profiles. Such peaks may be selected randomly or based on a particular parameter, such as intensity level. For example, in some cases, lower (but still above background) intensity peaks are more likely to represent a subset of oriented individual profiles. Once such a peak is identified, the individual profiles that contributed to that peak are extracted from the data set. The extracted individual profiles should all comprise a peak identical to the selected peak from the population profile.

Thus, in some instances, peaks that correspond to oriented profiles can be identified as such if (a) the peak profile is asymmetric and has peaks at fewer positions than the sample population profile, and (b) the combination of the direct and inverted peak profiles is identical to the symmetric population profile. These criteria are valid for homogeneous samples that include one polymer in two orientations.

In the case of a mixture of different polymers, the first criterion remains the same (although in this case the profile need not be asymmetric), but the second is not necessarily fulfilled. Once the mixture is separated into the profiles of different polymers, each of those profiles can be analyzed as described above to extract an oriented profile. However, in some cases, the profiles of different polymers may be already extracted in oriented form. This will depend on the complexity of the sample and profile, as well as the positioning and interference of individual peaks of different polymers.

It is to be understood that as used herein, "identical peaks" mean two or more peaks that are positioned identically along the length of the polymer (and correspondingly, along the length of the profile). Identical peaks may vary however in their intensity depending on whether the profile is an individual profile or a population profile. Additionally, there will be variations in the intensities of identical peaks between individual profiles.

Extracted individual profiles are then combined (as described herein) to yield a peak profile. The peak profile is therefore a population profile since it is made up of a plurality of individual profiles. The peak profile however is derived from only a subset of individual profiles as compared to the sample population profile which represents all profiles obtained from the sample. The peak profile is then compared to the sample population profile. Depending upon the nature of the sample and the desired degree of analysis, comparison of peak profiles to the sample population profile can take various forms and iterations: It is to be understood that although the description provided herein describes the comparison of a single peak profile with the sample population profile, comparison of a plurality of peak profiles and potentially all peak profiles may also be carried out by successive or concurrent iterations of the method. As will be apparent to one of ordinary skill in the art, such data manipulations can be performed using a computer.

If the peak profile resembles the sample population profile, this indicates that the peak profile is likely derived from individual profiles in both orientations (i.e., it is a non-oriented peak profile). As used herein, a peak profile that "resembles" a population profile consists of peaks that are present in the population profile. As stated above, identical peaks are peaks that are present at the same position along the polymer, regardless of their intensity.

If however the peak profile consists of only a subset of the peaks present in the sample population profile, then this suggests that the peak profile may derive from oriented individual profiles. If necessary, this can be confirmed in a number of ways. In an important embodiment, it is confirmed by inverting the peak profile, combining the direct and inverted peak profiles to yield a non-oriented peak profile, and comparing the non-oriented peak profile with the sample population profile. A non-oriented peak profile that consists of peaks that are all present in the sample population profile confirms the oriented nature of the originally selected peak profile and the individual profiles and polymers giving rise thereto. If the non-oriented population profile is identical to the sample population profile, this may further indicate that the sample is homogeneous. When a non-oriented peak profile is identical to a population profile, the two profiles consist of identically situated peaks.

Orienting polymers according to the invention may be performed using a one or a two step process, as described above. If a two step process is used, then peak profiles that appear to be oriented are referred to as "putative" oriented peak profiles since their oriented nature remains to be confirmed via the second step in the process.

Another method for confirming the oriented nature of a putative oriented peak profile is to determine whether individual peaks present in the peak profile have corresponding mirror images in the population profile when the alignment reference point is a center of molecule reference point. As used herein, a mirror image peak is a peak that exists distal to the center of molecule reference point and at a distance from the center of molecule reference point identical to the distance between the center of the molecule and the peak in question. For example, consider a peak that exists 20 microns to the left of the center of molecule reference point. Its mirror image would exist 20 microns to the right of the center of molecule reference point.

Yet another method for confirming the oriented nature of a putative oriented peak profile involves determining whether the putative oriented peak has a corresponding mirror image peak in the sample population profile when the alignment reference point is a center of molecule reference point. The mirror image peak can be processing similarly to the originally selected peak. For example, the individual profiles contributing to the mirror image peak can be extracted from the population data set, and thereafter combined, as described herein, to generate a mirror image peak profile. The mirror image peak profile can then be compared to the population profile in order to determine whether the profiles resemble or are identical to each other. The mirror image peak profile can also be compared to the inverted peak profile. If these latter profiles are identical, then the peak profile is oriented.

As described herein, the method selects peaks present in an intensity versus polymer length plot. This is intended to exemplify the analysis, particularly since the Examples and corresponding Figures illustrate such peaks. However, it is likely that individual peaks may not be as apparent experimentally, particularly when a sample of hundreds, or thousands, or millions of polymers is being analyzed. Accordingly, the method is not necessarily limited to the use of observable and discernable peaks. Rather it can be performed using bin counts. As used herein, a bin is a period of time in which the detection system collects signals from a polymer being analyzed. As an example, a bin may be 1 microsecond in duration, and 1000 consecutive bins may contain contiguous intensity data from one individual polymer. Each of the consecutive bins therefore corresponds to a position along the length of the polymer. Thus rather than using observable peaks, the method can be performed using bin counts (i.e., the number of signals such as photon counts) for one or more bins. Accordingly, as used herein, the term "peak" is meant to embrace observable and discernable increases in intensity on an intensity versus length plot as well as bin counts in one or more bins. In some instances, a peak may be defined by the signals (i.e., bin counts) falling into one or two, three, four, five or more consecutive bins.

It is to be understood that the methods provided herein can be used to distinguish polymers according to size. However, in some embodiments, it may be preferable to distinguish polymers based on size prior to alignment. This can be done by sorting polymers (and/or their corresponding data sets) according to intensity versus length characteristics.

The invention provides for additional data processing. In one embodiment, it may be desirable to remove signals deriving from an identified and oriented polymer from a sample population profile in order to discern signals from different polymers. In this way, the complexity of the sample population profile can be progressively reduced and/or the complexity of a sample can be determined. As used herein, the complexity of a sample refers to the number of different polymer types contained in the sample. Accordingly, a sample that contains 100 different polymer types is more complex than a sample that contains 2 different polymers, regardless of how many copies of each polymer is present in the sample.

Individual profiles or a subset of individual profiles (such as for example an oriented peak profile) may be subtracted from the sample population profile. Similarly, the inverted peak profile may also be subtracted from the sample population profile in order to effectively remove all signals from a given polymer. In this way, signals from a given polymer are removed from the population profile, thereby making it less complex and potentially allowing lower intensity peaks and/or profiles to be observed. As should be apparent to one of ordinary skill, if subtraction of the oriented and inverted peak profiles from the population profile results in a population profile devoid of peaks, then this indicates that the population was homogeneous for one particular polymer. If, on the other hand, there are additional peaks remaining after the subtraction, then this indicates that more than one polymer is present in the sample.

It is to be understood that subtraction of profiles from each other can only be accomplished when the profiles are of the same form (i.e., when both profiles are cumulative profiles or when both profiles are normalized or averaged profiles).

A "polymer" as used herein is a compound having a linear backbone of individual units which are linked together by linkages. In some cases, the backbone of the polymer may be branched. Preferably the backbone is unbranched and linear. The term "backbone" is given its usual meaning in the field of polymer chemistry. The polymers may be heterogeneous in backbone composition thereby containing any possible combination of polymer units linked together, such as peptide-nucleic acids (which have amino acids linked to nucleic acids and have enhanced stability). In one embodiment the polymers are, for example, nucleic acids, polypeptides, polysaccharides, or carbohydrates. In the most preferred embodiments, the polymer is a nucleic acid or a polypeptide. A polypeptide as used herein is a biopolymer comprised of linked amino acids.

The polymer is made up of a plurality of individual units. An "individual unit" as used herein is a building block or monomer which can be linked directly or indirectly to other building blocks or monomers to form a polymer. The polymer preferably is a polymer of at least two different linked units. The at least two different linked units may produce or be labeled to produce different signals.

The polymer as well as the probes that bind the polymer can be nucleic acids. The term "nucleic acid" is used herein to mean multiple nucleotides (i.e., molecules comprising a sugar (e.g., ribose or deoxyribose) linked to an exchangeable organic base, which is either a substituted pyrimidine (e.g., cytosine (C), thymidine (T) or uracil (U)) or a substituted purine (e.g., adenine (A) or guanine (G)). As used herein, the terms refer to oligoribonucleotides as well as oligodeoxyribonucleotides.

Nucleic acids can be obtained from existing nucleic acid sources (e.g., genomic or cDNA), or by synthetic means (e.g., produced by nucleic acid synthesis). Nucleic acids can be but are not limited to DNA and RNA. In important embodiments, the polymer being analyzed is a DNA or RNA. The DNA may be a genomic DNA such as nuclear DNA or mitochondrial DNA. The DNA may also be cDNA. The RNA may be mRNA or rRNA but is not so limited. Nucleic acid polymers to be analyzed may be amplified in vitro prior to analysis in some embodiments, while in others the nucleic acids are non-amplified in vitro.

Various modifications of nucleic acids are encompassed by the invention. Although not limiting, these usually apply to nucleic probes used to sequence the nucleic acid polymer. These modifications are described below.

Nucleic acids shall also include polynucleosides (i.e., a polynucleotide minus a phosphate) and any other organic base containing polymer. The nucleic acids can include other non-naturally occurring substituted purines and pyrimidines such as C-5 propyne modified bases (Wagner et al., Nature Biotechnology 14:840- 844, 1996). Purines and pyrimidines include but are not limited to adenine, cytosine, guanine, thymidine, 5-methylcytosine, 2-aminopurine, 2-amino-6-chloropurine, 2,6-diaminopurine, hypoxanthine, 2-thiouracil, pseudoisocytosine, and other naturally and non-naturally occurring nucleobases, and substituted and unsubstituted aromatic moieties. Other such modifications are known to those of skill in the art.

The nucleic acids may also encompass substitutions or modifications, such as in the base and/or sugar moiety. For example, they include nucleic acids having backbone sugars which are covalently attached to low molecular weight organic groups other than a hydroxyl group at the 3' position and other than a phosphate group at the 5' position. Thus, modified nucleic acids may include a 2'-O-alkylated ribose group. In addition, modified nucleic acids may include sugars such as arabinose instead of ribose.

The nucleic acids may be heterogeneous in backbone composition thereby containing any possible combination of polymer units linked together such as peptide nucleic acids (which have amino acid backbone with nucleic acid bases, and which are discussed in greater detail herein). In some embodiments, the nucleic acids are homogeneous in backbone composition.

As used herein with respect to linked units of a polymer, "linked" or "linkage" means two entities are bound to one another by any physicochemical means. Any linkage known to those of ordinary skill in the art, covalent or non-covalent, is embraced. Natural linkages, which are those ordinarily found in nature connecting the individual units of a particular polymer, are most common. Natural linkages include, for instance, amide, ester and thioester linkages. The individual units of a polymer and/or probes may be linked, however, by synthetic or modified linkages. Polymers in which units are linked by covalent bonds will be most common but may also include hydrogen bonded units, etc.

Intensity data may be obtained by analyzing polymers having probes bound thereto. These probes are preferably sequence specific. "Sequence specific" when used in the context of a nucleic acid means that the probe recognizes a particular linear arrangement of nucleotides or derivatives thereof. An analogous definition applies to non-nucleic acid polymers. In preferred embodiments, the linear arrangement includes contiguous nucleotides or derivatives thereof that each bind to corresponding contiguous complementary nucleotides on the target nucleic acid. In some embodiments, however, the sequence may not be contiguous as there may be one, two, or more nucleotides that do not have corresponding complementary residues in the target.

It is to be understood that any nucleic acid analog that is capable of recognizing a nucleic acid with structural or sequence specificity can be used as a probe to label sequence sites on a polymer or to identify a reference point. In most instances involving a nucleic acid polymer, the probes will form at least a Watson-Crick bond with the polymer. In other instances, the probe can form a Hoogsteen bond with the nucleic acid polymer, thereby forming a triplex with the target nucleic acid polymer. A nucleic acid sequence that binds by Hoogsteen binding enters the major groove of its target and hybridizes with the bases located there. Examples of these Hoogsteen binding probes include molecules that recognize and bind to the minor and major grooves of nucleic acids (e.g., some forms of antibiotics). The probes may form both Watson-Crick and Hoogsteen bonds with the polymer. BisPNA probes, for instance, are capable of both Watson-Crick and Hoogsteen binding to a nucleic acid polymer. When used to identify polymer sequence, it is preferred that the probes have strong sequence specificity.

The probe may be a peptide nucleic acid (PNA) and various forms thereof as described herein, a locked nucleic acid (LNA), DNA, RNA, or co-polymers of the above such as DNA-LNA co-polymers.

PNAs are DNA analogs having their phosphate backbone replaced with 2-aminoethyl glycine residues linked to nucleotide bases through glycine amino nitrogen and methylenecarbonyl linkers. PNAs can bind to both DNA and RNA targets by Watson-Crick base pairing, and in so doing form stronger hybrids than would be possible with DNA or RNA based probes.

Peptide nucleic acids are synthesized from monomers connected by peptide bonds (Nielsen, P.E. et al.. Peptide Nucleic Acids, Protocols and Applications, Norfolk: Horizon Scientific Press, p. 1-19 (1999)). They can be built with standard solid phase peptide synthesis technology.

PNA chemistry and synthesis allows for inclusion of amino acids and polypeptide sequences in the PNA design. For example, lysine residues can be used to introduce positive charges in the PNA backbone. All chemical approaches available for the modifications of amino acid side chains are directly applicable to PNAs.

PNA has a charge-neutral backbone, and this attribute leads to fast hybridization rates of PNA to DNA (Nielsen, P.E. et al. Peptide Nucleic Acids, Protocols and Applications. Norfolk: Horizon Scientific Press, p. 1-19 (1999)). The hybridization rate can be further increased by introducing positive charges in the PNA structure, such as in the PNA backbone or by addition of amino acids with positively charged side chains (e.g., lysines). PNA can form a stable hybrid with DNA molecule. The stability of such a hybrid is essentially independent of the ionic strength of its environment (Orum, H. et al., BioTechniques 19(3):472-480 (1995)), most probably due to the uncharged nature of PNAs. This provides PNAs with the versatility of being used in vivo or in vitro. However, the rate of hybridization of PNAs that include positive charges is dependent on ionic strength, and thus is lower in the presence of salt.

Several types of PNA designs exist, and these include single strand PNA (ssPNA), bisPNA, pseudocomplementary PNA (pcPNA).

The structure of PNA/DNA complex depends on the particular PNA and its sequence. Single stranded PNA (ssPNA) binds to ssDNA preferably in antiparallel orientation (i.e., with the N-terminus of the ssPNA aligned with the 3' terminus of the ssDNA) and with a Watson-Criclc pairing. PNA also can bind to DNA with a Hoogsteen base pairing, and thereby forms triplexes with dsDNA (Wittung, P. et al., Biochemistry 36:7973 (1997)).

Single strand PNA is the simplest of the PNA molecules. This PNA form interacts with nucleic acids to form a hybrid duplex via Watson-Crick base pairing. The duplex has different spatial structure and higher stability than dsDNA (Nielsen, P.E. et al.. Peptide Nucleic Acids, Protocols and Applications, Norfolk: Horizon Scientific Press, p. 1-19 (1999)). However, when different concentration ratios are used and/or in the presence of complimentary DNA strand, PNA/DNA/PNA or PNA/DNA/DNA triplexes can also be formed (Wittung, P. et al., Biochemistry 36:7973 (1997)). The formation of duplexes or triplexes additionally depends upon the sequence of the PNA. Thymine-rich homopyrimidine ssPNA forms PNA/DNA/PNA triplexes with dsDNA targets where one PNA strand is involved in Watson-Crick antiparallel pairing and the other is involved in parallel Hoogsteen pairing. Cytosine-rich homopyrimidine ssPNA preferably binds through Hoogsteen pairing to dsDNA forming a PNA/DNA/DNA triplex. If the ssPNA sequence is mixed, it invades the dsDNA target, displaces the DNA strand, and forms a Watson-Crick duplex. Polypurine ssPNA also forms triplex PNA/DNA/PNA with reversed Hoogsteen pairing.

BisPNA includes two strands connected with a flexible linker. One strand is designed to hybridize with DNA by a classic Watson-Crick pairing, and the second is designed to hybridize with a Hoogsteen pairing. The target sequence can be short (e.g., 8 bp), but the bisPNA/DNA complex is still stable as it forms a hybrid with twice as many (e.g., a 16 bp) base pairings overall. The bisPNA structure further increases specificity of their binding. As an example, binding to an 8 bp site with a probe having a single base mismatch results in a total of 14 bp rather than 16 bp.

Although not intending to be bound by any particular theory, the bisPNA molecule is thought to bind to its target site first via its Hoogsteen strand, followed by the invasion of the Watson-Crick strand to form a triplex with one of the original DNA strands displaced. To facilitate the second step, the hybridization reaction is performed at elevated temperature to increase the frequency of DNA helix opening (i.e., localized melting). That mechanism increases the overall hybridization rate dramatically, since at the moment of DNA opening, the Watson-Crick strand of bisPNA is positioned to invade the helix.

Preferably, bisPNAs have homopyrimidine sequences, and even more preferably, cytosines are protonated to form a Hoogsteen pair to a guanosine. Therefore, bisPNA with thymines and cytosines is capable of effective hybridization to DNA only at pH below 6.5. The first restriction - homopyrimidine sequence only - is inherent to the mode of bisPNA binding. Pseudoisocytosine (J) can be used in the Hoogsteen strand instead of cytosine to allow its hybridization through a broad pH range (Kuhn, H., J. Mol. Biol. 286:1337-1345 1999)).

BisPNAs have multiple modes of binding to nucleic acids (Hansen, G.I. et al., J. Mol. Biol. 307(1):67-74 (2001)). One isomer includes two bisPNA molecules instead of one. It is formed at higher bisPNA concentration and has tendency to rearrange into the complex with a single bisPNA molecule. Other isomers differ in positioning of the linker around the target DNA strands. All the identified isomers still bind to the same binding site/target.

Pseudocomplementary PNA (pcPNA) (Izvolsky, K.I. et al., Biochemistry 39: 10908-10913 (2000)) involves two single stranded PNAs added to dsDNA. One pcPNA strand is complementary to the target sequence, while the other is complementary to the displaced DNA strand. As the PNA/DNA duplex is more stable, the displaced DNA generally does not restore the dsDNA structure. The PNA/PNA duplex is more stable than the DNA/PNA duplex and the PNA components are self-complementary because they are designed against complementary DNA sequences. Hence, the added PNAs would rather hybridize to each other. To prevent the self-hybridization of pcPNA units, modified bases are used for their synthesis including 2,6-diamiopurine (D) instead of adenine and 2-thiouracil (^{s}U) instead of thymine. While D and ^{s}U are still capable of hybridization with T and A respectively, their self-hybridization is sterically prohibited.

This PNA construct also delivers two base pairs per every nucleotide of the target sequence. Hence, it can bind to short sequences similar to those that are bisPNA targets. The pcPNA strands are not connected by a hinge, and they have different sequences.

Hybridization of pcPNA can be less efficient than that of bisPNA because it needs three molecules to form the complex. However, the pseudocomplementary stands can be connected by a sufficiently long and flexible hinge.

Another bisPNA-based approach involves use of the displaced DNA strand (Demidov, V.V. et al., Methods: A Companion to Methods in Enzymology 23(2):123-131 (2001)). If the second bisPNA is hybridized close enough to the first one, then a run of DNA (up to 25 bp) is displaced, forming an extended P-loop. This run is long enough to be tagged. This combination is referred to as a PD-loop (Demidov, V.V. et al., Methods: A Companion to Methods in Enzymology 23(2):123-131 (2001)). Other applications for the opening are also designed including topological labels or "earrings". Tagging based on PD-loop has important advantages, including increased specificity.

In some embodiments, positive charges are incorporated into a probe such as a PNA based probe in order to improve the interaction between the probe and the polymer. Such modification increases the hybridization rate due to electrostatic attraction of the positively charged probe and the negatively charged backbone of the nucleic acid polymer.

Locked nucleic acid (LNA) molecules form hybrids with DNA, which are at least as stable as PNA/DNA hybrids (Braasch, D.A. et al., Chem & Biol. 8(1):1-7(2001)). Therefore, LNA can be used just as PNA molecules would be. LNA binding efficiency can be increased in some embodiments by adding positive charges to it. LNAs have been reported to have increased binding affinity inherently.

Commercial nucleic acid synthesizers and standard phosphoramidite chemistry are used to make LNA oligomers. Therefore, production of mixed LNA/DNA sequences is as simple as that of mixed PNA/peptide sequences. The stabilization effect of LNA monomers is not an additive effect. The monomer influences conformation of sugar rings of neighboring deoxynucleotides shifting them to more stable configurations (Nielsen, P.E. et al.. Peptide Nucleic Acids, Protocols and Applications, Norfolk: Horizon Scientific Press, p. 1-19 (1999)). Also, lesser number of LNA residues in the sequence dramatically improves accuracy of the synthesis. Naturally, most of biochemical approaches for nucleic acid conjugations are applicable to LNA/DNA constructs.

The probes can also be stabilized in part by the use of other backbone modifications. The invention intends to embrace in addition to the peptide and locked nucleic acids discussed herein, the use of the other backbone modifications such as but not limited to phosphorothioate linkages, phosphodiester modified nucleic acids, combinations of phosphodiester and phosphorothioate nucleic acid, methylphosphonate, alkylphosphonates, phosphate esters, alkylphosphonothioates, phosphoramidates, carbamates, carbonates, phosphate triesters, acetamidates, carboxymethyl esters, methylphosphorothioate, phosphorodithioate, p-ethoxy, and combinations thereof.

Other backbone modifications, particularly those relating to PNAs, include peptide and amino acid variations and modifications. Thus, the backbone constituents of PNAs may be peptide linkages, or alternatively, they may be non-peptide linkages. Examples include acetyl caps, amino spacers such as O-linlcers, amino acids such as lysine (particularly useful if positive charges are desired in the PNA), and the like. Various PNA modifications are known and probes incorporating such modifications are commercially available from sources such as Boston Probes, Inc.

One limitation of the stability of nucleic acid hybrids is the length of the probe, with longer probes leading to greater stability than shorter probes. Notwithstanding this proviso, the probes can be any length ranging from at least 4 nucleotides long to in excess of 1000 nucleotides long. In preferred embodiments, the probes are 6-100 nucleotides in length, more preferably between 5-25 nucleotides in length, and even more preferably 5-12 nucleotides in length. The length of the probe can be any length of nucleotides between and including the ranges listed herein, as if each and every length was explicitly recited herein. It should be understood that not all residues of the probe need hybridize to complementary residues in the target nucleic acid molecule. For example, the probe may be 50 residues in length, yet only 25 of those residues hybridize to the nucleic acid polymer. Preferably, the residues that hybridize are contiguous with each other.

The probes recognize and bind to sequences within the target polymer. If the polymer is itself a nucleic acid molecule, then the probe preferably recognizes and binds by hybridization to a complementary sequence within the target polymer. The specificity of binding can be manipulated based on the hybridization conditions. For example, salt concentration and temperature can be modulated in order to vary the range of sequences recognized by the probes.

The probes are preferably single stranded, but they are not so limited. For example, when the probe is a bisPNA it can adopt a secondary structure with the nucleic acid polymer resulting in a triple helix conformation, with one region of the bisPNA clamp forming Hoogsteen bonds with the backbone of the target polymer and another region of the bisPNA clamp forming Watson-Crick bonds with the nucleotide bases of the target polymer.

Polymer analysis according to the invention encompasses detecting signals intrinsically present in a polymer or signals from an extrinsic probe that is bound to the polymer. The signals in turn derive from labels or detectable moieties. The "label" or "detectable moiety" may be, for example, light emitting, energy accepting, fluorescing, radioactive, quenching, and the like, as the invention is not limited in this respect. Many naturally occurring units of a polymer are light emitting compounds or quenchers, and thus are intrinsically labeled. Both types of labels are useful according to the methods of the invention. Guidelines for selecting the appropriate labels, and methods for adding extrinsic labels to polymers are provided in more detail in US 6,355,420 B1.

The label or detectable moiety can be directly or indirectly detected. A directly detectable moiety is one that can be detected directly by its ability to emit and/or absorb light of a particular wavelength. An indirectly detectable moiety is one that can be detected indirectly by its ability to bind, recruit and, in some cases, cleave another moiety which itself may emit or absorb light of a particular wavelength. An example of indirect detection is the use of a first enzyme label which cleaves a substrate into directly detectable products. The label may be organic or inorganic in nature. For example, it may be chemical, peptide or nucleic acid in nature although it is not so limited. Labels can be conjugated to a polymer or probe using thiol, amino or carboxylic groups.

The labels described herein are referred to according to the systems by which they are detected. As an example, a fluorophore molecule is a molecule that can be detected using a system of detection that relies on fluorescence.

Generally, the label can be selected from the group consisting of an electron spin resonance molecule (such as for example nitroxyl radicals), a fluorescent molecule (i.e., fluorophores), a chemiluminescent molecule (e.g., chemiluminescent substrates), a radioisotope, an optical or electron density marker, an enzyme, an enzyme substrate, a biotin molecule, a streptavidin molecule, an electrical charge transferring molecule (i.e., an electrical charge transducing molecule), a chromogenic substrate, a semiconductor nanocrystal, a semiconductor nanoparticle, a colloid gold nanocrystal, a ligand, a microbead, a magnetic bead, a paramagnetic particle, a quantum dot, a chromogenic substrate, an affinity molecule, a protein, a peptide, nucleic acid, a carbohydrate, an antigen, a hapten, an antibody, an antibody fragment, and a lipid. They are not so limited however.

Examples of labels include fluorophores such as fluorescein (e.g., fluorescein succinimidyl ester), TRITC, rhodamine, tetramethylrhodamine, R-phycoerythrin, Cy-3, Cy-5, Cy-7, Texas Red, Phar-Red, allophycocyanin (APC); radioactive isotopes such as P³² or H³; epitope or affinity molecules such as FLAG and HA epitope; and enzymes such as alkaline phosphatase, horseradish peroxidase and β-galactosidase. Also envisioned is the use of semiconductor nanocrystals such as quantum dots, described in U.S. Pat. No. 6,207,392, as labels. Quantum dots are commercially available from Quantum Dot Corporation. The labels may be directly linked to the DNA bases or may be secondary or tertiary units linked to modified DNA bases.

Antibodies can be used according to the invention as probes as well as labels. Thus, polymers can be labeled using antibodies or antibody fragments and optionally their corresponding antigens, haptens or epitopes. In the latter embodiment, the antigen, hapten, or epitope may itself be labeled. Detection of bound antibodies is accomplished by techniques known to those skilled in the art. Antibodies bound to polymers can be detected by linking a label to the antibodies and then observing the site of the label. If antibody binding indicates sequence information, then the antibody should bind to the polymer in a sequence specific manner. If antibody binding indicates merely the presence of the polymer (e.g., represents the backbone of the polymer, as discussed below), then the antibody need not bind to the polymer in a sequence specific manner. In addition to the use of antigens, haptens and epitopes, antibodies can also be visualized using secondary antibodies or fragments thereof that are specific for the primary antibody. Polyclonal and monoclonal antibodies may be used. Antibody fragments include Fab, F(ab)₂, Fd and antibody fragments which include a CDR3 region.

In some embodiments, the polymer and/or probes are labeled with detectable moieties that emit distinguishable signals that can all be detected by one type of detection system. For example, the detectable moieties can all be fluorescent labels or they can all be radioactive labels. In other embodiments, the polymers and/or probes are labeled with moieties that are detected using different detection systems. For example, one polymer or unit may be labeled with a fluorophore while another may be labeled with a radioactive isotope.

In some instances, it may be desirable to further label the polymer with a standard marker. The standard marker may be used to identify the polymer including defining, but not distinguishing between, its ends. For example, the standard marker may be a backbone label. One subset of backbone labels for nucleic acids are nucleic acid stains that bind nucleic acids in a sequence independent manner. Examples include intercalating dyes such as phenanthridines and acridines (e.g., ethidium bromide, propidium iodide, hexidium iodide, dihydroethidium, ethidium homodimer-1 and -2, ethidium monoazide, and ACMA); minor grove binders such as indoles and imidazoles (e.g., Hoechst 33258, Hoechst 33342, Hoechst 34580 and DAPI); and miscellaneous nucleic acid stains such as acridine orange (also capable of intercalating), 7-AAD, actinomycin D, LDS751, and hydroxystilbamidine. All of the aforementioned nucleic acid stains are commercially available from suppliers such as Molecular Probes, Inc.

Still other examples of nucleic acid stains include the following dyes from Molecular Probes: cyanine dyes such as SYTOX Blue, SYTOX Green, SYTOX Orange, POPO-1, POPO-3, YOYO-1, YOYO-3, TOTO-1, TOTO-3, JOJO-1, LOLO-1, BOBO-1, BOBO-3, PO-PRO-1, PO-PRO-3, BO-PRO-1, BO-PRO-3, TO-PRO-1, TO-PRO-3, TO-PRO-5, JO-PRO-1, LO-PRO-1, YO-PRO-1, YO-PRO-3, PicoGreen, OliGreen, RiboGreen, SYBR Gold, SYBR Green I, SYBR Green II, SYBR DX, SYTO-40, -41, - 42, -43, -44, -45 (blue), SYTO-13, -16, -24, -21, -23, -12, -11, -20, -22, -15, -14, -25 (green), SYTO-81, -80, -82, -83, -84, -85 (orange), SYTO-64, -17, -59, -61, -62, -60, -63 (red).

In some instances, the detectable labels are part of a FRET system with fluorescence signals dependent upon the proximal location of donor and acceptor molecules. Preferably, fluorescence arises when donor and acceptor molecules are proximally located to each other.

Length-proportional DNA labeling also can be performed using the Label IT® kit which is commercially available from Mirus (Madison, WI). The kit covalently attaches different fluorophores to DNA. The fluorophores are rhodamine, fluorescein, Cy3^{™} and Cy5^{™}.

The polymers are analyzed using polymer analysis systems. As a polymer is analyzed, the detectable labels attached to it are detected in either a sequential or simultaneous manner. A linear polymer analysis system is a system that analyzes polymers in a sequential or linear manner (i.e., starting at one location on the polymer and then proceeding linearly in either direction therefrom). When detected simultaneously, the signals usually form an image of the polymer, from which distances between labels can be determined. When detected sequentially, the signals are viewed in histogram (signal intensity vs. time), that can then be translated into a profile such as those discussed herein, with knowledge of the velocity of the polymer. It is to be understood that in some embodiments, the polymer is attached to a solid support, while in others it is free flowing. In either case, the velocity of the polymer as it moves past, for example, an interaction and/or detection station will aid in determining the position of the labels, relative to each other and relative to other detectable markers that may be present on the polymer.

Accordingly, preferable polymer analysis systems are able to deduce not only the total amount of label on a polymer but perhaps more importantly, the location of such labels. The ability to detect, position, and orient profiles allows these profiles to be superimposed on other genetic maps, in order to orient and/or identify the regions of the genome being analyzed, for example. In preferred embodiments, the linear polymer analysis systems are capable of analyzing nucleic acid molecules individually (i.e., they are single molecule detection systems).

An example of a suitable polymer analysis system is the Gene Engine^{™} system described in PCT patent applications WO98/35012 and WO00/09757, published on August 13, 1998, and February 24, 2000, respectively, and in issued U.S. Patent 6,355,420 B1, issued March 12, 2002. This system allows single nucleic acid molecules to be passed through an interaction station in a linear manner, whereby the nucleotides in the nucleic acid polymer and/or the nucleic acid probe are interrogated individually in order to determine whether there is a detectable label conjugated thereto. Interrogation involves exposing the nucleic acid to an energy source such as optical radiation of a set wavelength. In response to the energy source exposure, the detectable label on the nucleotide (if one is present) emits a detectable signal. The mechanism for signal emission and detection will depend on the type of label sought to be detected.

Other single molecule nucleic acid analytical methods which involve elongation of DNA molecule can also be used in the methods of the invention. These include optical mapping (Schwartz, D.C. et al., Science 262(5130):110-114 (1993); Meng, X. et al., Nature Genet. 9(4):432-438 (1995); Ting, J. et al., Proc. Natl. Acad Sci. USA 95(14):8046-8051 (1998); and Aston, C. et al., Trends Biotechnol. 17(7):297-302 (1999)) and fiber-fluorescence in situ hybridization (fiber-FISH) (Bensimon, A et al., Science 265(5181):2096-2098 (1997)). In optical mapping, nucleic acids are elongated in a fluid sample and fixed in the elongated conformation in a gel or on a surface. Restriction digestions are then performed on the elongated and fixed nucleic acids. Ordered restriction maps are then generated by determining the size of the restriction fragments. In fiber-FISH, nucleic acids are elongated and fixed on a surface by molecular combing. Hybridization with fluorescently labeled probe sequences allows determination of sequence landmarks on the nucleic acids. Both methods require fixation of elongated nucleic acids so that molecular lengths and/or distances between markers can be measured. Pulse field gel electrophoresis can also be used to analyze the labeled nucleic acids. Pulse field gel electrophoresis is described by Schwartz, D.C. et al., Cell 37(1):67-75 (1984). Other nucleic acid analysis systems are described by Otobe, K. et al., Nucleic Acids Res. 29(22):E109 (2001), Bensimon, A. et al. in U.S. Patent 6,248,537, issued June 19, 2001, Herrick, J. et al., Chromosome Res. 7(6):409:423 (1999), Schwartz in U.S. Patent 6,150,089 issued November 21, 2000 and U.S. Patent 6,294,136, issued September 25, 2001. Other linear polymer analysis systems can also be used, and the invention is not intended to be limited to solely those listed herein.

The nature of such detection systems will depend upon the nature of the detectable moiety attached to the polymer. The detection system can be selected from any number of detection systems known in the art. These include an electron spin resonance (ESR) detection system, a charge coupled device (CCD) detection system, an avalanche photodiode (APD) detection system, a photomultiplier (PMT) detection system, a fluorescent detection system, an electrical detection system, a photographic film detection system, a chemiluminescent detection system, an enzyme detection system, an atomic force microscopy (AFM) detection system, a scanning tunneling microscopy (STM) detection system, an optical detection system, a nuclear magnetic resonance (NMR) detection system, a near field detection system, and a total internal reflection (TIR) detection system, many of which are electromagnetic detection systems.

Other interactions involved in methods of the invention will produce a nuclear radiation signal. As a radiolabel on a polymer passes through the defined region of detection, nuclear radiation is emitted, some of which will pass through the defined region of radiation detection. A detector of nuclear radiation is placed in proximity of the defined region of radiation detection to capture emitted radiation signals. Many methods of measuring nuclear radiation are known in the art including cloud and bubble chamber devices, constant current ion chambers, pulse counters, gas counters (i.e., Geiger-Müller counters), solid state detectors (surface barrier detectors, lithium-drifted detectors, intrinsic germanium detectors), scintillation counters, Cerenkov detectors, to name a few.

Other types of signals generated are well known in the art and have many detections means which are known to those of skill in the art. Some of these include opposing electrodes, magnetic resonance, and piezoelectric scanning tips. Opposing nanoelectrodes can function by measurement of capacitance changes. Two opposing electrodes create an area of energy storage, located effectively between the two electrodes. It is known that the capacitance of such a device changes when different materials are placed between the electrodes. This dielectric constant is a value associated with the amount of energy a particular material can store (i.e., its capacitance). Changes in the dielectric constant can be measured as a change in the voltage across the two electrodes. In the present example, different nucleotide bases or unit specific markers of a polymer may give rise to different dielectric constants. The capacitance changes as the dielectric constant of the unit specific marker of the polymer per the equation: C=KCₒ, where K is the dielectric constant and Cₒ is the capacitance in the absence of any bases. The voltage deflection of the nanoelectrodes is then outputted to a measuring device, recording changes in the signal with time.

Detectable signals are generated, detected and stored in a database. The signals can be analyzed to determine structural information about the polymer. The signals can be analyzed by assessing the intensity of the signal to determine structural information about the polymer. A computer may be used to store the database and/or perform the algorithms described herein. The computer may be the same computer used to collect data about the polymers, or may be a separate computer dedicated to data analysis. A suitable computer system to implement embodiments of the present invention typically includes an output device which displays information to a user, a main unit connected to the output device and an input device which receives input from a user. The main unit generally includes a processor connected to a memory system via an interconnection mechanism. The input device and output device also are connected to the processor and memory system via the interconnection mechanism. Computer programs for data analysis of the detected signals are readily available from CCD (Charge Coupled Device) manufacturers.

The present invention is further illustrated by the following Examples, which in no way showd be construed as further limiting.

### Examples

### Example 1: Mapping of 12M9 BAC.

A bacterial artificial chromosome. 12M9 BAC, was mapped using bisPNA #K tag:

TMR-OO-Lys-Lys-TTC TTC TC-OOO-TTJ-TTJ-TT-Lys-Lys

The BAC has target sites at 0.7, 10.2, 73.5, 152.4, 154.5, and 181.4 kb (Fig. 1, top panel). There are 82 sites with a single mismatch at the ends (SEMM) on this DNA. SEMM are sites to which sequence specific probes can bind even though they are not 100% complementary. These can be estimated from a known nucleic acid sequence. To obtain the map, all polymer traces were aligned using the center of molecule reference point (CM) and averaged (Fig. 2, top panel). This image represents the averaged signals from each bound probe on the overlayed but non-orieoted DNA polymers. Although other internal reference points can be used, CM is particularly useful as the reference point when the polymer is incompletely stretched. These polymers are not stretched homogeneously but rather can take a stem and flower conformation. (Manneville et al. Europhys. Lett. 36:413-418,1996.) In this conformation, most fluctuations are concentrated in the termini regions (i.e., the flower region), while the middle of DNA polymer remains highly stretched (i.e., the stem region). Therefore, even in incompletely stretched polymers the central portion is usable for analysis. The measured non-oriented map (continuous line) is overlapped in Fig. 2, top panel, with an expected (i.e., theoretical) one from the published 12M9 sequence (dashed line). The latter was obtained by representing the sequence on a 034 µm/kb scale, including the target signals as Gaussian curves 5 kb in width (Fig. 1, middle panel), and superimposing the map with its mirror image (Fig. 1, bottom panel). All the peaks expected for 12M9 BAC (designated A, B and C) are present in the experimental map.

One extra peak, designated D, was also present. It was hypothesized that this peak represents at least one extra target site, missed in the BAC and human genome sequence due to a sequencing error. To verify this, this region of the BAC was re-sequenced. It was found that beginning at position 64,388 bp, three SEMM sites are positioned in close proximity separated by a single base pair. Such close proximity alleviates the energetic cost of displacement of the second DNA strand and allows formation of stable complexes even with mismatching sites (a so-called P-loop structure). Because this complex is highly cooperative and can exist only if 2 or 3 SEMM sites are hybridized simultaneously, peak D is much higher than peak A which is formed by a single target.

A symmetric pattern of the sharp peaks is clearly visible on top of a featureless pedestal at an intensity of about 4-5 (Fig. 2, top panel). For comparison, the signals derived by DNA bound impurities as measured on untagged BACs is presented on the same picture (dot and dash curve). The major portion (if not all) of the measured map pedestal is due to signals from these impurities. The S/N ratio is very high for the mapping procedure itself.

To obtain the map profile that includes only DNA molecules oriented in one direction, we extracted the profiles that inputted into peaks A' and B (Fig. 2, top panel). Those peaks are formed by tags hybridized at positions 73.5 kb and 152.0/154.5 kb, respectively, and only molecules oriented in the same direction. Overall signals of these selected profiles were summed and averaged. The resulting oriented profile is presented in Fig. 2, bottom panel and compared with the theoretically expected profile (dashed line).

### Example 2: Algorithms.

In the general case, every peak of a non-oriented map can be tested, selecting the molecular traces contributing to it. If the peak includes tag signals from both polymer orientations, the selected map resembles the total non-oriented map. If the peak is formed only by signals from DNA polymers of one orientation, the selected map does not include all the peaks of the total non-oriented map. Moreover, it can be inverted and combined with itself to produce the total non-oriented map.

A similar approach can be applied to discriminate a couple of polymers of similar but not identical length. In this case, the peaks are searched in the total non-oriented map, which are formed by input of tags from one polymer only. The criterion for peak selection is that the map formed by the polymers inputting in the peak does not have all peaks present in the total non-oriented peak. Once the single polymer map is obtained, its oriented map can be further determined as described herein. In the case of more than two overlapping polymers, the same approach can be used to break the total non-oriented map into simpler combinations. It should be possible directly (if every polymer has a representative peak in the total non-oriented map), or step by step by subtracting single polymer maps from the total map and re-iterating the process thereby simplifying the map with each iteration.

The power of this approach is that it is based on the averaged pattern and therefore is not sensitive to stretching and tagging defects of a particular detected polymer profile. Most important are the mapping resolution and degree of labeling of every fragment. Better resolution increases the probability of isolating the peak with input from one polymer only. A higher degree of labeling improves detection of all other peaks belonging to the polymer. To some extent, incomplete labeling can be compensated by including more polymer traces in the averaging.

Selectivity can be further improved, using simultaneously several tags for different targets emitting in different spectral regions. In this case, the tags are detected independently. If some DNA polymers from the mixture can be identified using a map obtained with one of the tags, this identification can be applied to the maps obtained with all other tags. Similarly, if the tagging pattern is asymmetric for one of the tags, it can be used to orient the maps of this fragment obtained with all other tags. Application of different tags not only improves selectivity but also offers extra strategies for analysis. For example, one of the tags can be selected on the basis that it binds rarely and to be used for recognition of the fragments and orienting of their detected traces. In a complimentary manner, another tag can be selected with a high density of target sites on the DNA polymer to provide higher resolution mapping.

Algorithms containing such data processing steps can be provided in a software package. The software package will be capable of analyzing data from different color channels to automatically perform selection, orientation and averaging. The detection system used to generate the data can be outfitted with third color excitation and detection channels.

### Example 3: Genomic Sequencing and Pathogen Analysis.

This example describes two different types of analysis. In the first case, prior knowledge about the analyzed DNA samples is available. One example is mapping of BAC libraries generated for genomic analysis. For known genomes, rare-cutting restriction endonucleases can be used to generate fragments of different sizes. Moreover, BACs or small-size genomes can be analyzed as single molecules. A second example is the mapping of different strains of the same microorganism. In the latter application, a previously unsequenced genome of a known or unknown microbe can be analyzed. The major difference from the previous case is that restriction enzyme treatment results in an unknown distribution of sizes. However, even the use of rare cutters does not always guarantee a distribution of fragment sizes appropriate for linear polymer analysis, using systems such as the GeneEngine. To facilitate this analysis, several digests may be required.

One application of GeneEngine mapping with unknown genomes is restriction mapping. The major difference from the standard approach based on electrophoresis (for example see Brown, "Genomes." New York: John Wiley & Sons Inc. (1999) 472 p.) is that in addition to its size, every fragment can be characterized by a pattern of bound tags. This allows the generation of a species specific "barcode" which can be used, for example, for strain recognition. This will be useful for example in the fields of infection outbreaks in human and agricultural subjects, germ warfare, and the like.

### Equivalents

The foregoing written specification is considered to be sufficient to enable one skilled in the art to practice the invention. The present invention is not to be limited in scope by examples provided, since the examples are intended as a single illustration of one aspect of the invention. Various modifications of the invention in addition to those shown and described herein will become apparent to those skilled in the art from the foregoing description.

## Claims

1. A method for analyzing polymer intensity data from a sample comprising obtaining intensity profiles from individual labelled polymers contained in the sample, aligning individual intensity profiles from individual labelled polymers with respect to an alignment reference point,
combining aligned individual intensity profiles to generate a population profile,
selecting a peak in the population profile and obtaining individual intensity profiles that contribute to peak,
combining individual intensity profiles that contribute to the peak to generate a peak profile, and
comparing the peak profile with the population profile,
wherein the intensity profile is an intensity versus length profile or an intensity versus time histogram, in which intensity is plotted as a function of position on the polymer.

2. The method of claim 1, wherein the sample
(a) contains a heterogeneous mixture of polymers, which optionally comprises
(i) differentially sized fragments of a parent polymer, or
(ii) polymers with different sequences, or
(b) comprises polymers embedded in a gel matrix.

3. The method of claim 1 wherein the intensity data is fluorescence intensity data and intensity profiles are fluorescence intensity profiles.

4. The method of claim 1, wherein the polymers are labelled with
(a) a sequence specific probe, or
(b) a sequence non-specific label, optionally a backbone label, and optionally the alignment reference point is a center of molecule reference point that is optionally the midpoint of an individual profile.

5. The method of claim 1, wherein the method is implemented on a computer.

6. The method of claim 1, wherein the polymer is
(a) a nucleic acid, which optionally is
(i) DNA, which optionally is genomic nuclear DNA, mitochondrial DNA or cDNA, or
(ii) RNA, which optionally is mRNA,
(b) completely stretched,
(c) partially stretched, or
(d) uniformly stretched.

7. The method of claim 1, wherein the alignment reference point is an internal reference point and is optionally
(i) a center of molecule reference point,
(ii) a sequence specific probe bound to individual polymers, or
(iii) a sequence non-specific probe bound to individual polymers.

8. The method of claim 1, wherein the intensity profiles are obtained from
(i) individual polymers in flow, or
(ii) individual polymers fixed to a solid support.

9. The method of claim 1, wherein the population profile is
(i) a cumulative population profile, or
(ii) an average population profile.

10. The method of claim 1, wherein the peak profile is
(i) a cumulative peak profile, or
(ii) an averaged peak profile.

11. The method of claim 1, wherein the peak is selected based on
(i) intensity, or
(ii) the presence of its mirror image peak in the population profile.

12. The method of claim 1, wherein polymers in the sample are sorted according to size prior to aligning individual intensity profiles.

13. The method of claim 1, wherein a peak profile that resembles the population profile indicates a non-oriented profile.

14. The method of claim 1, wherein a peak profile that consists of a subset of peaks from the population profile indicates a putative oriented profile.

15. The method of claim 14, further comprising
(a) inverting the putative oriented profile to generate a putative inverted profile, combining the putative oriented profile with the putative inverted profile to generate a putative non-oriented profile, and comparing the putative non-oriented profile with the population profile, wherein a putative non-oriented profile that is identical to the population profile indicates that the putative oriented profile is an oriented profile, that the putative inverted profile in an inverted profile, and that the putative non-oriented profile is a non-oriented profile, or
(b) determining whether individual peaks in the peak profile have corresponding mirror image peaks in the population profile when the alignment reference point is a center of molecule reference point, optionally wherein the presence of corresponding mirror images indicates the putative oriented profile is an oriented profile, optionally further comprising subtracting the peak profile from the population profile, optionally further comprising inverting the oriented profile, combining the oriented profile with the inverted profile to generate a non-oriented profile, and comparing the non-oriented profile with the population profile, or
(c) determining whether the oriented peak has a corresponding mirror image peak in the population profile when the alignment reference point is a center of molecule reference point, optionally further comprising obtaining individual intensity profiles that contribute to the mirror image peak, and combining individual intensity profiles that contribute to the mirror image peak to generate a mirror image peak profile, optionally further comprising comparing the mirror image peak profile with the population profile, optionally further comprising determining whether the mirror image peak profile is a mirror image of the peak profile, optionally further comprising inverting and combining the mirror image peak profile with the peak profile provided the mirror image peak profile is a mirror image of the peak profile, optionally wherein the mirror image peak profile is (i) a cumulative mirror image peak profile, or (ii) an averaged mirror image peak profile, optionally further comprising subtracting the mirror image peak profile from the population profile, optionally further comprising subtracting the peak profile and the mirror image peak profile from the population profile, optionally further comprising determining whether additional peaks remain in the population profile following subtraction of the peak profile and the mirror image peak profile, and optionally the presence of additional peaks is indicative that the sample comprised different polymers, or
(d) subtracting the peak profile from the population profile.

16. The method of claim 1, wherein the peak
(i) is visible in an intensity versus length profile, or
(ii) corresponds to bin counts.

## Patentansprüche

1. Verfahren zum Analysieren von Polymerintcnsitätadatcn von einer Probe, welches Verfahren umfasst:
Erhalten von Intensitätsprofilen von individuellen, markierten Polymeren, die in der Probe enthalten sind;
Alignment individueller Intensitätsprofile von individuellen, markierten Polymeren in Bezug auf einen Alignment-Referenzpunkt;
Vereinen individueller Intensitätsprofile aus einem Alignment, um ein Populationsprofil zu erzeugen;
Auswählen eines Peaks in dem Populationsprofil und Erhalten individueller Intensitätsprofile, die zu dem Peak beitragen;
Vereinen individueller Intensitätsprofile, die zu dem Peak beitragen, um ein Peakprofil zu erzeugen, und
Vergleichen des Peakprofils mit dem Populationsprofil;
wobei das Intensitätsprofil ein Intensität/Längenprofil oder ein Intensität/Zeithistogramm ist, worin die Intensität als eine Funktion der Position auf dem Polymer aufgetragen ist.

2. Verfahren nach Anspruch 1, wobei die Probe;
(a) eine heterogene Mischung von Polymeren enthält, die wahlweise aufweist:
(i) differentiell größensortierte Fragmente eines Grundpolymers oder
(ii) Polymere mit unterschiedlichen Sequenzen oder
(b) Polymere aufweist, die in einer Gelmatrix eingebettet sind.

3. Verfahren nach Anspruch 1, bei welchem die Intensitätsdaten Fluoreszenzintensitätsdaten und die Intensitätsprofile Fluoreszenzintensitätsprofile sind.

4. Verfahren nach Anspruch 1, wobei die Polymere markiert sind mit:
(a) einer sequenzspezifischen Sonde oder
(b) einem nicht-sequenzspezifischen Marker, wahlweise einem Grundgerüstmarker, und wobei wahlweise der Alignment-Referenzpunkt ein Zentrum des Molektil-Referenzpunktes ist, der wahlweise der Mittelpunkt eines individuellen Profils ist.

5. Verfahren nach Anspruch 1, wobei das Verfahren auf einem Computer implementiert ist.

6. Verfahren nach Anspruch 1, wobei das Polymer
(a) eine Nucleinsäure ist, die wahlweise
(i) eine DNA ist, die wahlweise eine genomische, nucleäre DNA ist, eine mitochondrische DNA oder cDNA ist, oder
(ii) eine RNA ist, die wahlweise eine mRNA ist;
(b) vollständig gestreckt ist,
(c) teilweise gestreckt ist oder
(d) gleichförmig gestreckt ist.

7. Verfahren nach Anspruch 1, wobei der Alignment-Referenzpunkt ein innerer Referenzpunkt ist und wahlweise
(i) ein Zentrum des Molekül-Referenzpunktes ist,
(ii) eine sequenzspezifische Sonde ist, die an individuellen Polymeren gebunden ist, oder
(iii) eine nicht-sequenzspeaifische Sonde ist, die an individuellen Polymeren gebunden ist.

8. Verfahren nach Anspruch 1, wobei die Intensitätsprofile erhalten werden aus:
(i) individuellen Polymeren im Fluss Oder
(ii) individuellen Polymeren, die auf einem festen Träger fixiert sind.

9. Verfahren nach Anspruch 1, wobei das Populationsprofil
(i) ein kumulatives Populationsprofil ist oder
(ii) ein mittleres Populationsprofil ist.

10. Verfahren nach Anspruch 1, wobei das Peakprofil
(i) ein kumulatives Peakprofil ist oder
(ii) ein gemitteltes Peakprofil ist.

11. Verfahren nach Anspruch 1, wobei der Peak ausgewählt wird auf der Grundlage
(i) der Intensität oder
(ii) des Vorhandenseins seines Spiegelbildpeaks in dem Populationsprofil.

12. Verfahren nach Anspruch 1, wobei Polymere in der Probe entsprechend der Größe vor dem Alignment individueller Intensitätsprofile sortiert sind.

13. Verfahren nach Anspruch 1, wobei ein Peakprofil, welches dem Populationsprofil ähnlich ist, ein nichtorientiertes Profil anzeigt.

14. Verfahren nach Anspruch 1, wobei ein Peakprofil, das aus einer Unterreihe von Peaks aus dem Populationsprofil besteht, ein putativ orientiertes Profil anzeigt.

15. Verfahren nach Anspruch 14, ferner umfassend:
(a) Invertieren des putativ orientierten Profils, um ein putativ invertiertes Profil zu erhalten; Vereinen des putativ orientierten Profils mit dem putativ invertierten Profil, um ein putativ nichtorientiertes Profil zu erzeugen; und Vergleichen des putativ nichtorientierten Profils mit dem Populationsprofil, wobei ein putativ nichtorientiertes Profil, das mit dem Populationsprofil identisch ist, anzeigt, dass das putativ orientierte Profil ein orientiertes Profil ist; dass das putativ invertierte Profil ein invertiertes Profil ist, und dass das putativ nichtorientierte Profil ein nichtorientiertes Profil ist; oder
(b) Bestimmen, ob individuelle Peaks in dem Peakprofil entsprechende Spiegelbildpeaks in dem Populationsprofil haben, wenn der Alignment-Referenzpunkt ein Zentrum des Molekül-Referenzpunktes ist, wahlweise worin das Vorhandensein entsprechender Spiegelbilder anzeigt, dass das putativ orientierte Profil ein orientiertes Profil ist; wahlweise ferner umfassend das Subtrahieren des Peakprofils von dem Populationsprofil; wahlweise ferner umfassend das Invertieren des orientierten Profils, Vereinen des orientierten Profils mit dem invertierten Profil, um ein nichtorientiertes Profil zu erzeugen; und Vergleichen des nichtorientierten Profils mit dem Populationsprofil; oder
(c) Bestimmen, ob der orientierte Peak einen entsprechenden Spiegelbildpeak in dem Populationsprofil hat, wenn der Alignment-Referenzpunkt ein Zentrum des Molekül-Referenzpunktes ist, wahlweise ferner umfassend das Erhalten individueller Intensitätsprofile, die zu dem Spiegelbildpeak beitragen; und Vereinen individueller Intensitätsprofile, die zu dem Spiegelbildpeak beitragen, um ein Spiegelbildpeakprofil zu erzeugen; wahlweise ferner umfassend das Vergleichen des Spiegelbildpeakprofils mit dem Populationsprofil; wahlweise ferner umfassend das Bestimmen, ob das Spiegelbildpeakprofil ein Spiegelbild des Peakprofils ist; wahlweise ferner umfassend das Invertieren und Vereinen des Spiegelbildpeakprofils mit dem Peakprofil unter der Voraussetzung, dass das Spiegelbildpeakprofil ein Spiegelbild des Peakprofils ist; wahlweise worin das Spiegelbildpeakprofil (i) ein kumulatives Spiegelbildpeakprofil ist, oder (ii) ein gemitteltes Spiegelbildpeakprofil ist; ferner wahlweise umfassend das Subtrahieren des Spiegelbildpeakprofils von dem Populationsprofil; wahlweise ferner umfassend das Subtrahieren des Peakprofils und des Spiegelbildpeakprofils von dem Populationsprofil; wahlweise ferner umfassend das Bestimmen, ob zusätzliche Peaks in dem Populationsprofil nach der Subtraktion des Peakprofils und des Spiegelbildpeakprofils zurückbleiben; und wahlweise ist das Vorhandensein zusätzlicher Peaks kennzeichnend dafür ist, dass die Probe unterschiedliche Polymere aufweist; oder
(d) Subtrahieren des Peakprofils von dem Populationsprofil.

16. Verfahren nach Anspruch 1, bei welchem der Peak
(i) in einem Intensität/Längenprofil sichtbar ist oder
(ii) den Bin-Zählungen entspricht.

## Revendications

1. Méthode pour l'analyse de données d'intensités de polymères à partir d'un échantillon comprenant l'obtention de profils d'intensités provenant de polymères marqués individuels contenus dans l'échantillon, l'alignement des profils d'intensités individuels provenant de polymères marqués individuels par rapport à un point de référence d'alignement,
la combinaison des profils d'intensités individuels alignés pour générer un profil de population,
la sélection d'un pic dans le profil de population et l'obtention de profils d'intensités individuels qui contribuent au pic,
la combinaison des profils d'intensités individuels qui contribuent au pic pour générer un profil de pic, et
la comparaison du profil de pic avec le profil de population,
dans laquelle le profil d'intensités est un profil de l'intensité en fonction de la longueur ou un histogramme de l'intensité en fonction du temps, où l'intensité est tracée en fonction de la position sur le polymère.

2. Méthode suivant la revendication 1, dans laquelle l'échantillon:
a) contient un mélange hétérogène de polymères, qui comprend éventuellement:
i) des fragments différentiellement dimensionnés d'un polymère parent, ou
ii) des polymères avec des séquences différentes, ou
b) comprend des polymères noyés dans une matrice de gel.

3. Méthode suivant la revendication 1, dans laquelle les données d'intensités sont des données d'intensités de fluorescence et les profils d'intensités sont des profils d'intensités de fluorescence.

4. Méthode suivant la revendication 1, dans laquelle les polymères sont marqués avec:
a) une sonde spécifique à une séquence, ou
b) un marqueur non spécifique à une séquence, éventuellement un marqueur de squelette, et éventuellement le point de référence d'alignement est un centre de point de référence de molécule qui est éventuellement le point du milieu d'un profil individuel.

5. Méthode suivant la revendication 1, où la méthode est exécutée sur un ordinateur.

6. Méthode suivant la revendication 1, dans laquelle le polymère est:
a) un acide nucléique, qui est éventuellement:
i) un ADN, qui est éventuellement un ADN nucléaire génomique, un ADN mitochondrial ou un ADNc, ou
ii) un ARN, qui est éventuellement un ARNm,
b) complètement étiré,
c) partiellement étiré, ou
d) uniformément étiré.

7. Méthode suivant la revendication 1, dans laquelle le point de référence d'alignement est un point de référence interne et il est éventuellement:
i) un centre de point de référence de molécule,
ii) une sonde spécifique à une séquence liée à des polymères individuels, ou
iii) une sonde non spécifique à une séquence liée à des polymères individuels.

8. Méthode suivant la revendication 1, dans laquelle les profils d'intensités sont obtenus à partir:
i) de polymères individuels en circulation, ou
ii) de polymères individuels fixés à un support solide.

9. Méthode suivant la revendication 1, dans laquelle le profil de population est:
i) un profil de population cumulé, ou
ii) un profil de population moyen.

10. Méthode suivant la revendication 1, dans laquelle le profil de pic est:
i) un profil de pic cumulé, ou
ii) un profil de pic moyen.

11. Méthode suivant la revendication 1, dans laquelle le pic est choisi sur la base de:
i) l'intensité, ou
ii) la présence de son pic image miroir dans le profil de population.

12. Méthode suivant la revendication 1, dans laquelle les polymères dans l'échantillon sont triés suivant la taille avant d'aligner les profils d'intensités individuels.

13. Méthode suivant la revendication 1, dans laquelle un profil de pic qui ressemble au profil de population indique un profil non orienté.

14. Méthode suivant la revendication 1, dans laquelle un profil de pic qui est constitué d'un sous-groupe de pics provenant du profil de population indique un profil orienté putatif.

15. Méthode suivant la revendication 14, comprenant en outre:
a) l'inversion du profil orienté putatif pour générer un profil inversé putatif, la combinaison du profil orienté putatif avec le profil inversé putatif pour générer un profil non orienté putatif, et la comparaison du profil non orienté putatif avec le profil de population, où un profil non orienté putatif qui est identique au profil de population indique que le profil orienté putatif est un profil orienté, que le profil inversé putatif est un profil inversé, et que le profil non orienté putatif est un profil non orienté, ou
b) la détermination si les pics individuels dans le profil de pic ont des pics image miroir correspondants dans le profil de population lorsque le point de référence d'alignement est un centre de point de référence de molécule, où éventuellement la présence d'images miroir correspondantes indique que le profil orienté putatif est un profil orienté, comprenant en outre éventuellement la soustraction du profil de pic au profil de population, comprenant en outre éventuellement l'inversion du profil orienté, la combinaison du profil orienté avec le profil inversé pour générer un profil non orienté, et la comparaison du profil non orienté avec le profil de population, ou
c) la détermination si le pic orienté possède un pic image miroir correspondant dans le profil de population lorsque le point de référence d'alignement est un centre de point de référence de molécule, comprenant en outre éventuellement l'obtention de profils d'intensités individuels qui contribuent au pic image miroir, et la combinaison des profils d'intensités individuels qui contribuent au pic image miroir pour générer un profil de pic image miroir, comprenant en outre éventuellement la comparaison du profil de pic image miroir avec le profil de population, comprenant en outre éventuellement la détermination si le profil de pic image miroir est une image miroir du profil de pic, comprenant en outre éventuellement l'inversion et la combinaison du profil de pic image miroir avec le profil de pic à condition que le profil de pic image miroir soit une image miroir du profil de pic, où éventuellement le profil de pic image miroir est (i) un profil de pic image miroir cumulé, ou (ii) un profil de pic image miroir moyen, comprenant en outre éventuellement la soustraction du profil de pic image miroir au profil de population, comprenant en outre éventuellement la soustraction du profil de pic et du profil de pic image miroir au profil de population, comprenant en outre éventuellement la détermination si des pics supplémentaires restent dans le profil de population à la suite d'une soustraction du profil de pic et du profil de pic image miroir, et éventuellement la présence de pics supplémentaires indique que l'échantillon est composé de polymères différents, ou
d) la soustraction du profil de pic au profil de population.

16. Méthode suivant la revendication 1, dans laquelle le pie:
i) est visible dans un profil de l' intensité en fonction de la longueur, ou
ii) correspond à des comptages de «bins».
